Europäisches Patentamt

European Patent Office

Office européen des brevets

(19)

(11) Veröffentlichungsnummer : **0 053 322**
**B1**

(12) # EUROPÄISCHE PATENTSCHRIFT

(45) Veröffentlichungstag der Patentschrift :
15.05.85

(51) Int. Cl.⁴ : **G 01 N   1/20**

(21) Anmeldenummer : **81109733.6**

(22) Anmeldetag : **17.11.81**

(54) **Gerät zur repräsentativen Probennahme von Rohöl.**

(30) Priorität : **24.11.80 DEU 8031198**

(43) Veröffentlichungstag der Anmeldung :
**09.06.82 Patentblatt 82/23**

(45) Bekanntmachung des Hinweises auf die Patenterteilung : **15.05.85 Patentblatt 85/20**

(84) Benannte Vertragsstaaten :
**GB NL**

(56) Entgegenhaltungen :
**DE-A- 1 807 394
DE-A- 2 306 211
DE-A- 2 514 413
FR-A- 2 414 194
GB-A- 2 042 471
US-A- 2 729 105
US-A- 4 172 670**

(73) Patentinhaber : **BEB Gewerkschaften Brigitta und Elwerath Betriebsführungsgesellschaft mbH
Riethorst 12
D-3000 Hannover 51 (DE)**

(72) Erfinder : **Höner zu Siederdissen, Jürgen, Dr.
Riethorst 12
D-3000 Hannover 51 (DE)**
Erfinder : **Wundram, Friedrich, Dipl.-Phys.
Riethorst 12
D-3000 Hannover 51 (DE)**

(74) Vertreter : **Schubert, Siegmar, Dipl.-Ing. et al
Patentanwälte Dr. V. Schmied-Kowarzik Dr. P. Weinhold Dr.-Ing. G. Dannenberg Dr. D. Gudel Dipl.-Ing. S. Schubert Dr. P. Barz Grosse Eschenheimer Strasse 39
D-6000 Frankfurt am Main 1 (DE)**

EP 0 053 322 B1

Jouve, 18, rue St-Denis, 75001 Paris, France

## Beschreibung

Die Erfindung betrifft ein Gerät zur Probennahme von Rohöl aus einer Rohöltransportleitung mit einem Sammelgefäß gemäß dem Oberbegriff des Patentanspruchs. Eine derartige Einrichtung ist aus dem Dokument US-A-4 172 670 bekannt.

Zur Rohölmengenerfassung bei Einspeise- und Verbrauchsmessungen der von einem Einspeiser in eine Rohöltransportleitung beispielsweise an Raffinerien abgegebenen Verkaufsmengen muß die mittlere Dichte des Rohöls bestimmt werden. Die mittlere Dichte wird aus zeitlich aufeinanderfolgend entnommenen Teilproben bestimmt. Im Ergebnis stellt die Dichte der Gesamtprobe dann einen Faktor der gesamten Rohölmenge dar, die in dem Probenentnahmezeitraum durch die Rohöltransportleitung transportiert wurde, bzw. in sie eingespeist oder aus ihr entnommen wurde.

Bei bekannten Probennahmen von Rohöl mittels eines offenen Sammelgefäßes tritt jedoch eine Verfälschung der gemessenen Dichte deswegen ein, weil bei der Einleitung der Proben in das Sammelgefäß eine mehr oder weniger große Entgasung in den freien Raum über den Flüssigkeitsspiegel des Sammelgefäßes in die umgebende Atmosphäre eintritt. Infolge dieser Entgasungsverluste können die in ein offenes Sammelgefäß entnommenen Proben nur noch eingeschränkt zur Bestimmung der mittleren Dichte der Gesamtmenge herangezogen werden. Insbesondere wird bei dieser Probennahme infolge der Entgasungsverluste bei der anschließenden Dichtemessung eine zu hohe Dichte gemessen. Daraus kann wiederum eine zu große errechnete Verkaufsmenge resultieren. Darüber hinaus können sich auf Leitungssträngen, bei denen neben den Einspeisemessungen selbst die Summe der Einspeisemessungen als Verkaufsmenge getrennt erfaßt wird, infolge der Fehler der Probe, systematische Differenzen zwischen den Einspeisungs- und Verkaufsmengen ergeben.

Zu der vorliegenden Erfindung gehört daher die Aufgabe, ein Gerät zur repräsentativen Probennahme so auszubilden, daß die über einen längeren Zeitraum entnommenen Proben möglichst geringe Entgasungsverluste aufweisen, so daß eine exaktere Bestimmung der mittleren Dichte der Gesamtmenge möglich ist. Dieses Gerät soll sich trotz der Ausscheidung des Entgasungsfehlers durch einen möglichst geringen Herstellungsaufwand auszeichnen.

Diese Aufgabe wird für ein Gerät der eingangs genannten Gattung durch die in dem kennzeichnenden Teil des Patentanspruchs angegebenen Merkmale gelöst.

Mit dem erfindungsgemäßen Gerät werden Entgasungsverluste praktisch vollständig vermieden, da die Proben in ein geschlossenes Volumen eingeleitet werden, welches jeweils nur so groß ist, wie es zur Aufnahme der Probenmenge erforderlich ist. Bei der aufeinanderfolgenden Entnahme der einzelnen Proben vergrößert sich dieses Volumen entsprechend der zugeführten Probenmengen. Diese Vergrößerung erfolgt selbsttätig, indem der in den Zylindern verschiebbar gelagerte Kolben unter dem Druck des Rohöls in der Rohöltransportleitung während der Probennahme verschoben wird, und so nur das jeweils benötigte Volumen in dem Zylinder freigibt. Zur Erreichung dieses Vorteils ist der Kolben in dem Zylinder so reibungsarm gelagert, daß er zwar unter dem Rohöltransportleitungsdruck, aber nicht bei druckloser Transportleitung verschoben wird. Damit ist auch sichergestellt, daß in den Zeiten, in denen kein Rohöl durch die Rohöltransportleitung transportiert wird, Proben in den Probenbehälter gelangen. — Zur Probennahme wird das Gerät mit dem Zylinder mittels der Schnellschlußkupplung mit Verriegelung im gelösten Zustand an eine Probenentnahmeleitung angeschlossen. Zur Entleerung des Geräts mit dem Zylinder wird der Kolben in dem Zylinder manuell zurückgeschoben.

Das Gerät ist so ausgestaltet, daß in einer in den Zylindermündenden Verbindungsleitung, in die die Schnellschlußkupplung eingefügt ist, das Magnetventil als Einlaßventil angeordnet ist.

Mit diesem Gerät erfolgt die Probennahme nicht kontinuierlich, sondern durch das intermittierend betätigte Magnetventil. Die Öffnungszeit und die Öffnungsintervalle können dabei in wenig aufwendiger Weise über eine Zeitschaltung eingestellt werden, welche mit dem Magnetventil gekoppelt ist.

Durch das Handrad gesteuert kann der Näherungsschalter ein Signal abgeben, wenn der Zylinder ganz gefüllt ist und der bewegliche Kolben dem entsprechend seine Endstellung erreicht hat. Das Signal verhindert durch Schließen des Magnetventils ein Überfüllen des Zylinders.

Das erfindungsgemäße Gerät wird im folgenden anhand einer Zeichnung mit 3 Figuren erläutert.

Es zeigt :

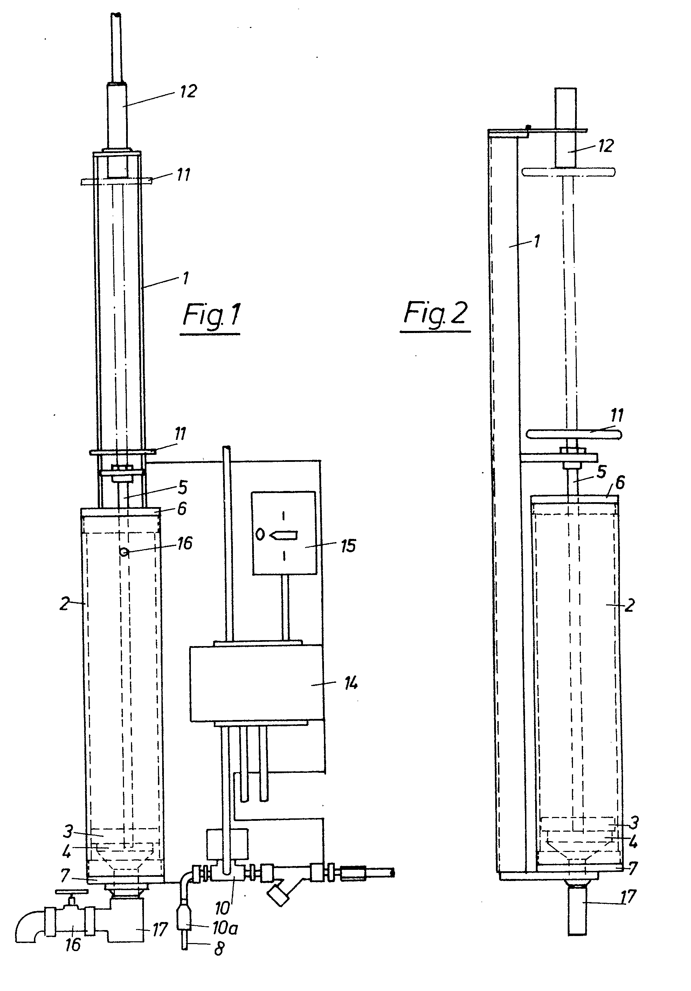

Figur 1  das Gerät in einer Vorderansicht (verkleinert),

Figur 2  das Gerät nach Fig. 1 in einer Seitenansicht und

Figur 3  eine Verbindungsleitung, die an einen Zylinder in Fig. 1 anschließbar ist, mit auseinandergenommenen Verbindungselementen (in natürlicher Größe).

In dem Zylinder ist ein Kolben 3 verschiebbar gelagert, der durch die Kolbenwand hierdurch erkennbar in der Zeichnung mit einer unterbrochenen Linie dargestellt ist. Der Kolben weist zur reibungsarmen Lagerung in dem Zylinder einen in eine Nut 4 eingelassenen Nutring aus Simrit (nicht dargestellt) auf. Zur Lagerung des Kolbens dient auch eine in diesem befestigte Kolbenstange 5, die durch einen Deckel 6 an einem Ende des Zylinders hindurchgeführt ist.

An dem entgegengesetzten Ende des Zylinders ist dieser durch einen Boden 7 abgeschlossen.

Eine Verbindungsleitung 8 mit einer Schnellschlußkupplung verbindet das Innere des Zylinders zum Anschluß des Geräts an eine nicht dargestellte Rohöltransportleitung mit einem Magnetventil 10 auf einer an dem Träger 1 angebrachten Platine. Das Magnetventil 10 kann durch eine nicht dargestellte elektrische Zeitschaltungsanordnung intermittierend geöffnet und geschlossen werden. Hierzu steht es mit einem Schaltkasten 14 und einem Schalter 15 in elektrischer Verbindung, die ebenfalls auf der Platine 13 montiert sind.

Am oberen Ende der Kolbenstange 5 ist ein Handrad als Betätigungselement 11 eines Näherungsinitiators angebracht, der mit 12 bezeichnet ist und ebenfalls an dem Träger 1 angebracht ist. Der Näherungsschalter ist über den Schaltkasten so mit dem Magnetventil 10 verbunden, daß das Magnetventil einen weiteren Einlaß von Rohöl durch die Verbindungsleitung 8 sperrt, wenn der Zylinder gefüllt ist und sich dementsprechend das Betätigungselement 11 in der dargestellten Lage zu dem Näherungsschalter 12 befindet. Die in dem Zylinder 2 vor der Endlage des Kolbens 3 angebrachte Öffnung 16 verhindert, daß bei Versagen der nicht dargestellten Zeitschaltung oder des Magnetventils sich im Zylinder ein Überdruck entwickeln kann.

Durch Herunterdrücken des als Handrad ausgebildeten Betätigungselements 11 kann der Zylinderinhalt entleert werden, und zwar bei geschlossenem Magnetventil 10 durch einen Absperrhahn 17 an einem Verzweigungsstück. Dieses Verzweigungsstück führt andererseits über die Verbindungsleitung 8 zu einer Schlauch-Schraubfassung 10a an dem Magnetventil 10.

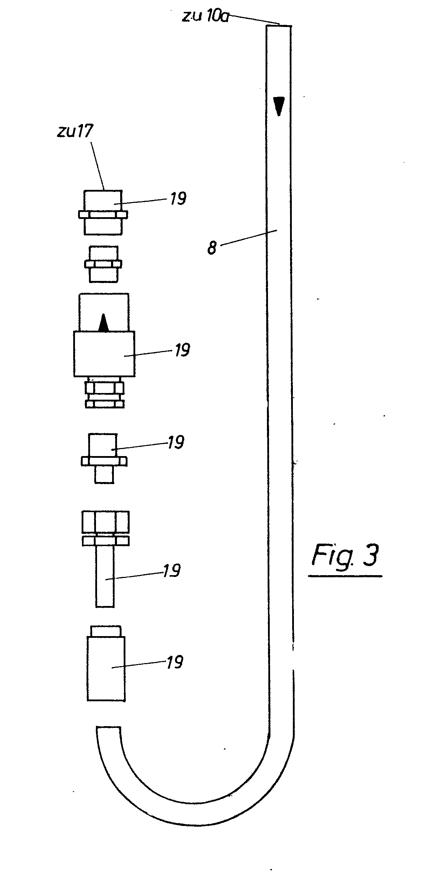

Die Verbindungsleitung umfaßt zumindest teilweise einen flexiblen Schlauch sowie Schlauch- und Verbindungsamaturen 19, die aus Fig. 3 im einzelnen hervorgehen, in der sie vor der Montage der Verbindungsleitung auseinanderge-zogen dargestellt sind.

## Patentanspruch

Gerät zur Probenentnahme von Rohöl aus einer Transportleitung mit einem Sammelgefäß, das als eine über eine Verbindungsleitung (8) mit Verriegelung an die Transportleitung anschließbare Zylinderkammer einer Kolben-Zylinder-Einheit (2, 3) ausgebildet ist, an deren Kolbenstange ein Handrad (11) zu deren Betätigung befestigt ist, dadurch gekennzeichnet, daß der Kolben (3) durch den in der Transportleitung herrschenden Öldruck verschiebbar ist, daß die Verbindungsleitung (8) mit der Transportleitung über eine Schnellschlußkupplung verbunden ist und daß im Verschiebungsweg des Handrades (11) ein Näherungsschalter (12) angeordnet ist, der elektrisch mit einem Magnetventil (10) in der Ver-bindungsleitung (8) verbunden ist.

## Claim

A device for withdrawing a sample of crude oil from carrying pipe, which device has a collecting vessel provided by the cylinder of a piston cylinder unit (2, 3), the cylinder being connected to the carrying pipe *via* a connecting pipe (8) having a locking connector, the piston having a piston rod with a handwheel fitted thereto for operation, characterised in that the piston (3) is adapted to be moved by the pressure prevailing in the carrying pipe, in that the connecting pipe (8) is connected to the carrying pipe *via* a snap coupling, and in that a proximity switch is associated with the handwheel (11) movement and is connected electrically to a magnetic valve (10) in the connecting pipe (8).

## Revendication

Appareil pour le prélèvement d'échantillons d'huile brute d'une conduite de transport, comportant un récipient collecteur qui est réalisé sous la forme d'une chambre cylindrique d'un groupe piston-cylindre (2, 3) qui peut être raccordé par l'intermédiaire d'une conduite de liaison (8) avec verrouillage à la conduite de transport, une manette (11) étant fixée sur la tige de piston pour la manœuvre, appareil caractérisé en ce que le piston (3) peut être déplacé par la pression régnant dans la conduite de transport, en ce que la conduite de liaison (8) est reliée à la conduite de transport par un accouplement à fermeture rapide, et en ce que sur le parcours de déplacement de la manette (11) il est disposé un détecteur de proximité (12) qui est relié électriquement à une soupape magnétique (10) posée sur la conduite de liaison (8).

_Fig.1_

_Fig.2_

Fig. 3